# EUROPÄISCHE PATENTSCHRIFT

(11) **EP 2 080 985 B1**
(45) Veröffentlichungstag und Bekanntmachung des Hinweises auf die Patenterteilung: **24.10.2012**
(21) Anmeldenummer: 08020878.8
(22) Anmeldetag: 02.12.2008
(51) Int. Cl.: G01C 21/36, G08G 1/0968, G08G 1/0969

(54) **Navigationseinrichtung**
Navigation apparatus
Système de navigation

(30) Priorität: 18.01.2008 DE 102008005210; 26.05.2008 DE 102008025053
(43) Veröffentlichungstag der Anmeldung: 22.07.2009
(73) Patentinhaber: Navigon AG, 20251 Hamburg (DE)
(72) Erfinder: Mühlfelder, Mathias, 97082 Würzburg (DE); Katzer, Jochen, 91605 Gallmersgarten (DE)
(74) Vertreter: von den Steinen, Axel

(56) Entgegenhaltungen:
- EP-A1- 1 024 347
- EP-A1- 1 681 537
- EP-A1- 1 681 538
- EP-A2- 1 965 173

## Beschreibung

Die Erfindung betrifft eine Einrichtung zur Ermittlung und Anzeige eines Streckenverlaufes, insbesondere eine Navigationseinrichtung, sowie ein Verfahren zum Betrieb einer solchen Einrichtung gemäß den unabhängigen Ansprüchen.

Bei der Verwendung von Navigationsgeräten ist es üblich, Straßenkarteninformationen aus Wegenetzdatenbanken und vom Gerät ermittelte Streckenverlaufsinformationen bzw. Routeninformationen je nach Streckensituation mehr oder weniger detailliert darzustellen. Dem Benutzer des Navigationssystems soll dabei im Rahmen der Streckenführung eine möglichst übersichtliche und realistische Darstellung bezüglich der vor ihm liegenden und abzufahrenden Streckensituation vom Gerät angeboten werden.

Der Benutzer muss seine Aufmerksamkeit sowohl der realen Verkehrssituation als auch der Darstellung am Navigationsgerät widmen. Weicht die Darstellung zu stark von der realen Situation ab, so muss der Benutzer einen erheblichen Teil seiner Aufmerksamkeit auf die Interpretation der vom Navigationsgerät präsentierten Information aufwenden. Dies stellt jedoch gerade bei bevorstehenden schwierigen Fahrzeugmanövern, die die volle Aufmerksamkeit des Benutzers erfordern, ein Sicherheitsproblem dar, weil der Fahrer permanent das aktuelle Umfeld mit der Darstellung am Navigationsgerät abgleichen und gleichzeitig den Verkehr im Auge behalten muss. Die Unfallgefahr steigt daher gerade bei komplexen Streckenverlaufsänderungen überproportional an.

Zur Verbesserung der Übersicht bei komplexen Übergängen von Wegen beschreibt die US-Patentschrift US 6,999,075 B2 das Konzept und die Funktion einer dreidimensionalen Anzeige in Verbindung mit einem Navigationsgerät für eine möglichst realistische Darstellung unterschiedlichster Straßenverhältnisse mittels einer entsprechenden Anzeigevorrichtung. Das hier gezeigte Gerät umfasst eine Informationsverarbeitungseinrichtung, die Karteninformationen mit Informationen über eine Straße zu einem Ziel und Routeninformationen erzeugt. Das Gerät berücksichtigt Bergauf-Straßenanteile sowie Bergab- oder Geradeaus-Straßenanteile bei der Anzeige. Zusätzlich beschreibt diese Patentschrift eine Vielzahl möglicher Straßenkonstellationen, welche für den Benutzer visualisiert werden können.

Der Wiedererkennungswert für den Benutzer des Navigationssystems im Hinblick auf die tatsächlichen Strockenverhältnisse, so dass er die vom Navigationsgerät angezeigten Informationen eindeutig den tatsächlichen Streckenverhältnissen zuordnen kann, wird jedoch als gering und durchaus verbesserungswürdig eingeschätzt, wenn eine tatsächliche praktische Entlastung des Benutzers bewirkt werden soll. Es handelt sich mehr oder weniger lediglich um schematische Darstellungen, welche sich ausschließlich auf die Visualisierung des Straßennetzes sowie die abzufahrende Route und unterschiedliche Höhenniveaus der Straßen beschränken.

Die Veröffentlichung EP 1 024 347 A1 offenbart ein Navigationssystem, bei dem beim Befahren einer Strecke in üblicher Weise eine Landkarte des kommenden Gebietes dargestellt wird und bei Annäherung an eine Kreuzung automatisch eine Zusatzansicht eingeblendet wird, welche die kommende Kreuzungssituation darstellt. Hierbei wird unter anderem angegeben, dass es möglich ist, dem Fahrer eine fotographische Aufnahme der Kreuzungssituation darzustellen.

Die Veröffentlichung EP 1 681 538 A1 offenbart ein Navigationsgerät, bei dem es insbesondere Aufgabe ist, eine dem realen Erscheinen nachgebildete animierte Ansicht zu erzeugen. Zu diesem Zwecke wird die Außenhülle von markanten Gebäuden durch mathematisch einfache Flächen ersetzt. Diese vereinfachte Geometrie wird im Navigationssystem gespeichert und kann in einer dreidimensionalen Ansicht bei Annäherung an die Gebäude in einer zur Fahrrichtung passenden Ansicht gerendert dargestellt werden. Des Weiteren wird offenbart, dass die darzustellende Ansicht automatisch bei Annäherung an entsprechende Gebäude oder bei Kreuzungen umschaltet. Hierbei wird eine darzustellende Ansicht aufgebaut, die aus mehreren Layerschichten mit einer Mehrzahl weiterer Informationen aufgebaut wird.

Die Veröffentlichung EP 1 681 537 A1 offenbart ein Navigationsgerät und ein Verfahren zur Anzeige animierter Kreuzungsansichten mittels einer Ausgabeeinrichtung eines Fahrzeugnavigationsgeräts. Auch in dieser Drucksschrift wird eine entsprechende Kreuzungsansicht beim Annähern an eine Kreuzung erstellt und ausgegeben

Die Veröffentlichung EP 1 965 173 A2 beschreibt eine Navigationseinrichtung und ein Verfahren zur graphischen Ausgabe von Navigationsanweisungen, wobei zumindest in Abhängigkeit des Vorliegens einer komplexen Kreuzungssituation auf der Navigationsroute die komplexe Kreuzungssituation auf der Anzeigeeinrichtung in Form einer Perspektivdarstellung dargestellt wird.

Ausgehend von diesem Stand der Technik ist es die Aufgabe der Erfindung, eine Einrichtung zur Ermittlung und Anzeige eines Streckenverlaufes sowie ein geeignetes Betriebsverfahren für eine solche Einrichtung vorzuschlagen, wobei die Anzeige der Einrichtung einen möglichst hohen Wiedererkennungswert bezüglich des realen Erscheinungsbildes eines komplexen Streckenverlaufes für den Benutzer gewährleisten soll.

Insbesondere soll die Erfindung für den Benutzer eine selbsttätige und besonders einfache und intuitive Erkennbarkeit der Darstellung komplexer Kreuzungssituationen und Abzweigungssituationen auf dem Bildschirm eines Navigationsgerätes ermöglichen. Dabei soll ein hoher Grad der Übereinstimmung zwischen der sich dem Nutzer z.B. im Vorfeld einer komplexen Kreuzung bietenden Sicht und der Darstellung des entsprechenden Navigationsmanövers auf dem Bildschirm erzielt werden. Auf diese Weise sollen Komfort und Sicherheit bei der Benutzung von Navigationsgeräten maßgeblich verbessert werden, insbesondere im Vorfeld während der Routenführung bei komplexen Wegeübergängen.

Dabei soll sichergestellt werden, dass durch die Darstellungen derartiger Kreuzungssituationen und Abzweigungssituationen eine mögliche Verunsicherung oder Verwirrung des Benutzers nach Möglichkeit vollständig ausgeschlossen wird. Weiter soll die Darstellungen derartiger Kreuzungssituationen und Abzweigungssituationen begrenzt werden, so dass keine für den Benutzer wenig oder nicht informative Darstellungen erzeugt werden, die damit unnötig die Leistungsfähigkeit des entsprechenden Navigationsgeräts bzw. der entsprechenden Einrichtung negativ beeinträchtigen.

Die Aufgabe wird mittels einer Einrichtung und einem Verfahren gemäß den unabhängigen Ansprüchen gelöst.

Bevorzugte Ausführungsformen sind Gegenstand der jeweiligen Unteransprüche.

Die Einrichtung gemäß der vorliegenden Erfindung dient in an sich zunächst bekannter Weise zur Ermittlung und Anzeige eines von einem Wegenetz umfassten Streckenverlaufes für ein Fortbewegungsmittel und umfasst eine Datenverarbeitungseinrichtung, welche auch zur Ermittlung des Streckenverlaufes dient und ein Anzeigemittel, welches auch zur "Visualisierung des ermittelten Streckenverlaufes dient. Die Wegenetzinformationen bezieht die Einrichtung aus einer für die Einrichtung zumindest zeitweise zugänglichen Wegenetzdatenbank, welche von der Einrichtung umfasst sein kann oder außerhalb der Einrichtung liegen kann und beispielsweise mittels eines Onlinezugriffs zugänglich sein kann. Auch ein Download oder eine gelegentliche Datenaktualisierung bei Bedarf wäre denkbar, so dass Wegenetzdaten beispielsweise mittels Onlinezugriff nach einem Download auf der Einrichtung lokal und offline zur Verfügung stehen.

Die Einrichtung ist dabei derart eingerichtet, dass diese derart eingerichtet ist, dass bei Vorliegen einer für die Verfolgung des ermittelten Streckenverlaufes erforderlichen Richtungsänderung, welche durch einen Übergang des Streckenverlaufes von einem ersten Weg auf einen zweiten Weg und durch ein Verlassen des ersten Weges gekennzeichnet ist, insbesondere beruhend auf einer Wegekreuzung oder beruhend auf einer Wegeverzweigung, ein Wechsel zwischen zumindest einer ersten und einer zweiten Betriebsart erfolgt, wobei eine der zumindest zwei Betriebsarten zur dynamischen und perspektivischen Visualisierung des Übergangs mittels Überlagerung zumindest zweier Visualisierungsschichten dient.

An allen Übergängen (z.B. Autobahnausfahrt) ist es somit möglich, unter Berücksichtigung der Umgebung eine Ansicht des Übergangs mit sehr hohem Wiedererkennungswert für den Benutzer darzustellen, was eine bessere Übersicht beim bevorstehenden Manöver gewährleistet und die Unfallgefahr reduziert. Die erste Betriebsart stellt dabei die übliche Darstellung des Streckenverlaufes im Wegenetz dar (z.B. 2D-Anzeige). Der selbsttätige und dynamische Wechsel von der ersten zur zweiten Betriebsart abhängig von einem bevorstehenden Übergang führt zu einer Entlastung des Benutzers immer dann, wenn er seine volle Aufmerksamkeit dem bevorstehenden Manöver widmen muss. Nach Bewerkstelligung des Manövers durch Passieren des Übergangs kann dann erneut ein selbsttätiger Wechsel von der zweiten (z.B. 3D-Anzeige) zurück in die erste Betriebsart oder eine andere Betriebsart erfolgen.

Der Wechsel zwischen den Betriebsarten kann dabei nach Maßgabe zumindest eines Betriebsartensteuerparameters und/oder eines Betriebsartenregelwerkes realisiert sein, welche beide beispielsweise auf für den Übergang relevanten Informationen aus einer Wegenetzdatenbank basieren können. Als konkretes Beispiel wäre ein Hinweis in Form eines Schildes kurz vor einer streckenrelevanten Ausfahrt zu nennen, wodurch die erfindungsgemäße Aktivierung der entsprechenden Betriebsart zur perspektivischen und dynamischen Visualisierung des bevorstehenden Übergangs getriggert werden könnte. Erfindungsgemäß erfolgt ein sofortiges Deaktivieren der perspektivischen Visualisierung, sobald der Übergang mittels des Fortbewegungsmittels von dem Benutzer der Einrichtung passiert wurde.

Bei mehreren dicht aufeinander folgenden komplexen Übergängen (z.B. Abfahrten oder Ausfahrten) wird mittels der Erfindung die Identifizierbarkeit des relevanten Übergangs noch weiter erhöht, was für den Benutzer einen Mehrwert durch eine messbare bessere Zielführung darstellt (Zeit- und Kostenersparnis). Das schnelle Erfassen der aktuellen Situation (z.B. Ausfahrtsituation) mittels der erfindungsgemäßen Lösung, beispielsweise durch eine großflächige graphische bzw. photorealistische Darstellung einer Autobahnausfahrt, erleichtert dem Benutzer die Konzentration auf den Verkehr und hilft, Unfällen oder Verkehrsbehinderungen vorzubeugen. Durch die realitätsnahe Umsetzung der Umgebung am Navigationsgerät, beispielsweise durch hohe Informationsdichte und photorealistische Darstellung aller Texte, welche sich auf den umgebenden Verkehrsschildern tatsächlich befinden, wird erreicht, dass der Nutzer einen hohen Wiedererkennungswert bezüglich der realen Umgebung feststellen wird. Zudem ist wegen der dynamischen Arbeitsweise keine Speicherung von statischen Einzelbilddatensätzen konkreter Wegeübergangssituationen erforderlich, weil die Einrichtung die zur Visualisierung erforderliche Bildinformation unter Berücksichtigung der aktuell ermittelten Wegeübergangssituation selbsttätig im Vorfeld oder bei Bedarf generiert und damit nicht im Speicher vorhalten muss. Damit wird auf mobilen Geräten kritischer Speicherplatz eingespart, was wiederum die Anschaffungskosten für den Benutzer senkt, und es können auch weniger häufig befahrene Übergangssituationen, für die üblicherweise keine statisch vordefinierten Einzelbilddatensätze vorhanden sind, mit einem hohen Wiedererkennungswert höchstflexibel visualisiert werden.

Aus dem Stand der Technik bekannte Ansätze haben z.B. den Nachteil, dass bei Erzeugung des Bildes (z.B. einer Autobahnkreuzung) auf statisches Bildausgangsmaterial zurückgegriffen wird, welches speziell und ausschließlich nur für die aktuell betroffene Kreuzung im Speicher vorgehalten wird. Die Erzeugung solcher so genannter Reality Views oder Junction Views für Autobahnkreuze ist technisch zwar für jede Kreuzung denkbar, allerdings ist durch die vorher zu leistende manuelle Erfassung der Kreuzungen und die Speicherung der gewonnen Daten abgesehen vom erforderlichen Aufwand auch eine Beschränkung der Abdeckung zu erwähnen, da aus Kostengründen nicht alle Kreuzungen vom Anbieter des Kartenmaterials abgefahren und gespeichert werden können. Das Feature RealityView ist daher derzeit speziell für Autobahnausfahrten aufgrund mangelnder Daten nicht verfügbar und würde eine enorme lokale Speicherkapazität erfordern, wollte man diese Daten zusätzlich zu der bereits ohnehin vorhandenen erheblichen Menge an Kartendaten zum Beispiel lokal im Gerät abspeichern.

Üblich ist es auch, aus dem Kartenmaterial Informationen über die an einer Übergangssituation vorherrschende Spurensituation (LaneInfo) zu ermitteln und während der Navigation am Anzeigemittel anzuzeigen.

Vorzugsweise ist zur Erhöhung des Wiedererkennungswertes für den Benutzer der Einrichtung die Einrichtung derart eingerichtet, dass aus der Wegenetzdatenbank ermittelbare und für den Streckenverlauf relevante Informationen, insbesondere Informationen bezüglich der realen Beschilderung am Straßenrand, bei der Visualisierung berücksichtigt werden. Zusätzlich können insbesondere für die Visualisierung von Verkehrsschildern Informationen unter Berücksichtigung des Landes, in dem die Einrichtung betrieben wird, ermittelt und berücksichtigt werden, wobei diese Informationen unter Berücksichtigung von in diesem Land üblichem Linksverkehr oder Rechtsverkehr vorzugsweise spiegelverkehrt darstellbar sind. Ein höherer Wiedererkennungswert für den Benutzer der Einrichtung kann ebenfalls dadurch erreicht werden, dass bezüglich des ermittelten Streckenverlaufes relevante Informationen (z.B. Ortsname /Symbole) auf am Anzeigemittel dargestellten Verkehrsschildern markierbar sind.

Vorzugsweise umfasst eine Visualisierungsschicht zumindest einen Bilddatensatz, wodurch die Erstellung einer Visualisierungsschicht flexibel und dynamisch mittels unterschiedlichen Bildmaterials realisierbar wäre, was die Modularität des erfindungsgemäßen Konzeptes weiter erhöht.

Die Überlagerung von Visualisierungsschichten bzw. Bilddatensätzen könnte nach Maßgabe zumindest eines Überlagerungssteuerparameters und/oder eines Überlagerungsregelwerkes realisiert sein, wobei dann festlegbar ist, welche Visualisierungsschichten bzw. Bilddatensätze auf welche Art und Weise überlagert werden. Dies erhöht die Flexibilität bei der Erzeugung einer möglichst realitätsnahen, dynamischen Visualisierung mittels der Einrichtung.

Nachfolgend werden einige Maßnahmen genannt, mittels derer der Widererkennungswert des visualisierten Bildes zusätzlich gesteigert werden kann. Dies kann beispielsweise vorzugsweise dadurch erreicht werden, dass auch eine Visualisierungsschicht bzw. ein Bilddatensatz mit zumindest einer fotografischen oder videografischen Aufnahme des realen Übergangs zur Überlagerung vorgesehen ist, oder dass auch eine Visualisierungsschicht bzw. ein Bilddatensatz mit zumindest einer dreidimensionalen und/oder fotorealistisch gerenderten Aufnahme des realen Wegeübergangs vorgesehen ist, oder dass auch eine Visualisierungsschicht bzw. ein Bilddatensatz zur Darstellung für zumindest eine grafische Kurve bzw. zumindest einen durchgehenden Pfeil zur Symbolisierung des ermittelten Streckenverlaufes vorgesehen ist, oder dass auch eine Visualisierungsschicht bzw. ein Bilddatensatz mit einem beweglichen bzw. veränderlichen grafischen Element vorgesehen ist, wobei das grafische Element den aktuellen Standort der Einrichtung symbolisiert, oder dass auch eine Visualisierungsschicht bzw. ein Bilddatensatz mit weiteren grafischen Elementen vorgesehen ist, insbesondere mit Verkehrsschildern, Brücken, Unterführungen, Points of Interest, Icons, Tunnel, Gebäudesilhouetten oder Landschaftsmerkmalen, in Anlehnung an die reale Umgebung des Wegeübergangs.

Bezüglich der Speicherverwaltung ist es vorteilhaft, wenn die Inhalte der Visualisierungsschichten bzw. der Bilddatensätze zumindest teilweise unabhängig von der mittels Überlagerung erzeugten fertigen Perspektivdarstellung abgespeichert sind und modular abrufbar sind.

Die Erfindung betrifft ferner ein Verfahren zum Betrieb einer Einrichtung zur Ermittlung und Anzeige eines von einem Wegenetz umfassten Streckenverlaufes für ein Fortbewegungsmittel. Bei der Einrichtung handelt es sich insbesondere um eine Navigationseinrichtung, wie bereits zuvor ausführlich beschrieben.

Das erfindungsgemäße Verfahren umfasst folgende Verfahrensschritte, wobei die gewählte Reihenfolge nicht der Reihenfolge der tatsächlichen Implementierung oder Ausführung während des Betriebes entsprechen muss.

Im Rahmen des Verfahrens erfolgt die Darstellung der aktuellen Bewegungsrichtung des Fortbewegungsmittels innerhalb des Wegenetzes am Anzeigemittel im Rahmen einer ersten Betriebsart. Das Anzeigemittel wird diesbezüglich und abhängig von der aktuellen Position von der Einrichtung fortlaufend und selbsttätig aktualisiert.

Im Rahmen des Verfahrens erfolgt weiter die Ermittlung bzw. Darstellung einer erforderlichen Richtungsänderung, welche für die Verfolgung des ermittelten Streckenverlaufs mittels des Fortbewegungsmittels erforderlich ist und welche durch einen Übergang von einem ersten Weg des Wegenetzes auf einen zweiten Weg des Wegenetzes verursacht ist. Unter diesem Übergang bzw. Richtungswechsel wird ein vom Benutzer der Einrichtung aktiv durchzuführender Wechsel des aktuell mittels des Fortbewegungsmittels befahrenen Weges verstanden, welcher erforderlich ist, um dem ermittelten Streckenverlauf zum Ziel zu folgen. Ein solcher Wechsel kann beispielsweise auch durch eine Ausfahrt, insbesondere eine möglicherweise mit einem Spurwechsel einhergehende Autobahnausfahrt, oder auch durch das erforderliche Abbiegen an einer Kreuzung oder durch einen Wegeübergang an einer bevorstehenden Abzweigung gekennzeichnet sein.

Im Rahmen des erfindungsgemäßen Betriebes erfolgt ein selbsttätiger Wechsel zwischen zwei Betriebsarten zur dynamischen Visualisierung des Übergangs am Anzeigemittel. Unter dynamischer Visualisierung wird erfindungsgemäß verstanden, dass die Einrichtung die zur Visualisierung der Übergangssituation erforderlichen Visualisierungsschichten selbsttätig generiert und/oder selbsttätig überlagert. Die Bildinformation wird also nicht für alle denkbaren Übergänge statisch beispielsweise mittels eines Speichers vorgehalten, sondern streckenspezifisch von der Einrichtung bereitgestellt. Dies bedeutet allerdings nicht, dass die Daten zur Visualisierung der Übergangssituation genau zu dem Zeitpunkt bereitgestellt werden müssen, wenn die Übergangssituation unmittelbar bevorsteht. Schon während der anfänglichen Ermittlung des Streckenverlaufes, sobald das Ziel bekannt ist, oder zu Zeiten, während der das Datenverarbeitungsmittel beispielsweise nicht ausgelastet ist, könnten die für diesen Streckenverlauf spezifischen Visualisierungsschichten von der Einrichtung vorbereitet (d.h. erzeugt und /oder überlagert) werden, so dass sie im Verlauf der Routenführung schneller abrufbar sind.

Der Wechsel zwischen den Betriebsarten kann nach Maßgabe zumindest eines Betriebsartensteuerparameters und/oder eines Betriebsartenregelwerkes erfolgen. Dabei kann das Regelwerk beispielsweise auf einer logisch verknüpfbaren Befehlsfolge oder dergleichen ähnlich einer Programmiersprache basieren, welche von der Einrichtung bei der Ansteuerung des Anzeigemittels berücksichtigt wird (z.B. durch Interpreter), indem beispielsweise für den Übergang relevante Informationen aus einer Wegenetzdatenbank im Regelwerk abgehandelt werden und zu Steueranweisungen für den Visualisierungsvorgang umgesetzt werden. Als konkrctcs Beispiel wären Verkehrsschilder vor einer Ausfahrt zu nennen, welche vom Regelwerk gezielt positionsabhängig abgefragt und erkannt werden, so dass anschließend die selbsttätige Aktivierung der perspektivischen Visualisierung erfolgen könnte, wobei erfindungsgemäß erneut ein sofortiges Deaktivieren der perspektivischen Visualisierung erfolgt, sobald die Ausfahrt passiert wurde.

Erfindungsgemäß werden zur Visualisierung des Übergangs mittels der Wegenetzdatenbank auch Informationen bezüglich des zumindest abschnittsweise nach dem Übergang vorherrschenden Wegenetzes ermittelt und berücksichtigt. Dies ermöglicht eine Analyse der Streckensituation, insbesondere der Kurvensituation für die nachfolgende Strecke nach dem Übergang, insbesondere bei einer Ausfahrt. Unter Berücksichtigung dieser Analyse erfolgt die Visualisierung auch dieser Ausfahrtsituation am Anzeigemittel im Rahmen der Auswahl oder Erzeugung einer geeigneten Visualisierungsschicht. Beispielsweise könnte die nachfolgende Straßensituation zur Vorbereitung des Fahrers beispielsweise im Falle einer starken Links- oder Rechtskurve dargestellt werden, so dass sich der Fahrer auf die bevorstehenden Manöver vorbereiten kann bzw. vorgewarnt ist.

Weiter werden vorzugsweise mittels der Wegenetzdatenbank auch Elevations-Daten bezüglich des am Übergang beteiligten Wegenetzes ermittelt und berücksichtigt. Die Suche der Elevations-Daten beispielsweise einer Autobahnausfahrt erfolgt im Kartenmaterial des Kartenherstellers (Wegenetzdatenbank). Aus dem Ergebnis dieser Suche kann dann beispielsweise abgeleitet werden, welche Visualisierungsschicht(en) zur Darstellung am Anzeigemittel herangezogen werden muss/müssen. Verläuft beispielsweise die auf den Übergang folgende Straße im weiteren Straßenverlauf über die Autobahn, kann dies anhand des Elevations. Datenmodelles der Autobahnausfahrt und der relevanten Straßenabschnitte im Kartenmaterial des Datenherstellers erkannt werden. In der Umsetzung einer solchen Ansicht könnte dementsprechend eine Visualisierungsschicht oder ein Bilddatensatz mit einem Brückensymbol für die abfahrende Straße nach der Ausfahrt verwendet werden (Straße verläuft hier oberhalb der Autobahn). Falls die Autobahn selbst höher liegt und die abfahrende Straße oder die angrenzende Straße tiefer liegt, könnte eine Visualisierungsschicht oder ein Bilddatensatz mit einem Unterführungssymbol eingezeichnet werden. All diese Maßnahmen erhöhen den Wiedererkennungswert der realen Situation gegenüber der Darstellung am Gerät.

Besonders vorteilhaft ist es, wenn im Rahmen der Visualisierung auch die Charakteristika der am Übergang beteiligten Wege aus der Wegenetzdatenbank ermittelt und berücksichtigt werden, insbesondere die Anzahl der Fahrspuren, Links/Rechts-Verkehr, geometrische Eigenschaften der Fahrspuren oder auch hier Überführungssituationen und/oder Unterführungssituationen.

Bevorzugt werden auch mittels der für die Einrichtung zugänglichen Wegenetzdatenbank weitere bezüglich des am Übergang beteiligten Wegenetzes relevante Informationen ermittelt und berücksichtigt, insbesondere Informationen bezüglich der realen Beschilderung der Wege, wobei die Darstellung von Schildern insbesondere unter Berücksichtigung des Landes, in dem die Einrichtung betrieben wird, erfolgt. Wenn immer dies möglich ist, sollten diese ohnehin vorhandenen Informationen aus dem Kartenmaterial zur Visualisierung verwendet bzw. ausgewertet werden, um die Visualisierung realitätsnah zu gestalten.

Besonders bevorzugt wird auch die aktuelle am Betriebsort der Einrichtung vorherrschende lokale Tageszeit zur Berücksichtigung von Tag oder Nacht bei der perspektivischen Visualisierung ermittelt und berücksichtigt. So ist beispielsweise eine Tag-/Nachtansicht des zu visualisierenden Übergangs realisierbar.

Weiter vorteilhaft für eine möglichst realitätskonforme Visualisierung ist, dass auch die Charakteristika der am Wegeübergang vorherrschenden Umgebungsbedingungen ermittelt und berücksichtigt werden, insbesondere das Vorhandensein von Brücken, Unterführungen, Points of Interest, Icons, Tunnels, Grebäudesilhouetten oder Landschaftsmerkmalen. All diese Maßnahmen vereinfachen für den Benutzer die Verarbeitung der am Anzeigemittel dargestellten Informationen durch Vergleich der tatsächlichen Umgebung mit der Darstellung am Anzeigemittel.

Zusätzlich kann eine zumindest teilweise Überlagerung einer Visualisierungsschicht erfolgen, welche Visualisierungsmittel zur Kennzeichnung des Streckenverlaufes entlang des Übergangs umfasst, insbesondere zumindest ein Pfeilsymbol zur Symbolisierung eines mittels des Fortbewegungsmittels vorzunehmenden Richtungswechsels und/oder Fahrspurwechsels.

Auch ist es denkbar, dass zusätzlich eine zumindest teilweise Überlagerung einer Visualisierungsschicht erfolgt, welche zur Darstellung von aus der Wegenetzdatenbank ermittelbaren streckenspezifischen und/oder ortsspezifischen Informationen dient oder dass zusätzlich eine zumindest teilweise Überlagerung weiterer Visualisierungsschichten zur Darstellung weiterer aus der Wegenetzdatenbank ermittelbarer Informationen und/oder während des Betriebs oder im Vorfeld ermittelter navigationsrelevanter Informationen dient.

Es werden außerdem natürlich auch noch navigationsrelevante Informationen vom Anzeigemittel zusätzlich mit eingeblendet, so dass ein perspektivisches Gesamtbild des Übergangs entsteht, was den Wiedererkennungswert der Umgebung für den Benutzer erhöht.

Die Visualisierungsschichten umfassen vorzugsweise Bilddatensätze oder zumindest Teilbereiche von Bilddatensätzen, welche wiederum zur Realisierung der Visualisierungsschicht herangezogen werden können. Dadurch wird Flexibilität bei der Gestaltung von Visualisierungsschichten erhöht, denn es könnten auch Teile von mehreren modularen Bilddatensätzen gemeinsam zur Realisierung einer Visualisierungsschicht herangezogen werden.

Vorzugsweise erfolgt die Überlagerung der Bilddatensätze nach Maßgabe zumindest eines Visualisierungssteuerparameters und/oder eines Visualisierungsregelwerkes, wodurch individuell auf den aktuell zu visualisierenden Übergang beispielsweise unter Berücksichtigung der aus der Wegenetzdatenbank auslesbaren Informationen eingegangen werden kann, was wiederum die Realitätsnähe der am Anzeigemittel dargestellten Situation erhöht.

Selbstverständlich können erfindungsgemäße Einrichtungen in beliebigen Ländern eingesetzt werden. Nun ist allerdings zu berücksichtigen, dass in einigen Ländern, wie zum Beispiel UK und Australien, Linksverkehr üblich ist. Zu diesem Zwecke werden für die Einrichtung zugängliche Visualisierungsschichten zur zumindest teilweisen Darstellung des Übergangs bei Linksverkehr zumindest teilweise derart bearbeitet, dass die Bildinformation spiegelverkehrt bezüglich des vor der Bearbeitung vorhandenen Ausgangsbilddatensatzes bzw. der Visualisierungsschicht am Anzeigemittel angezeigt werden kann. Mittels dieser Maßnahme kann wiederum insbesondere bei mobilen Geräten wertvoller Speicherplatz eingespart werden, da man auf ohnehin vorhandenes Bilddatenmaterial zugreift.

Ebenfalls können in Bezug auf Darstellungsparameter der Beschilderung landesspezifische Besonderheiten berücksichtigt werden, die in der Darstellung landesindividueller Anpassungen der Schilder, wie die Farbe, Schriftkennzeichen, verwendete Symbolik etc., Berücksichtigung finden.

Zur weiteren Verbesserung der Zielführung sind Mittel zur besonderen Kennzeichnung eines Ortes vorgesehen, welche innerhalb einer Visualisierungsschicht eingeblendet werden können. Die Visualisierung des Zielortes beispielsweise auf einem mittels einer Visualisierungsschicht dargestellten Straßenschild kann zusätzlich genutzt werden, um den Ortsnamen auf dem Schild besonders hervorzuheben bzw. zu kennzeichnen. So ist es beispielsweise möglich, auf dem Ausfahrtsschild den betreffenden Ort kursiv, fett, halbtransparent, in einer anderen Schriftart oder Schriftfarbe oder mittels eines anderen Kennzeichnungsmittels speziell zu kennzeichnen.

Je nach Komplexität der darzustellenden Übergangssituation können aufgrund des modularen erfindungsgemäßen Konzeptes mehr oder weniger Informationen für den Benutzer am Anzeigemittel flexibel und dynamisch von der Einrichtung zur Verfügung gestellt werden. Beispielsweise könnten folgende Informationen umfasst sein:
a) Anzahl der Fahrspuren;
b) Markierung der zu nutzenden Fahrspur;
c) Anzeige einer Umgebung einer Autobahnausfahrt, welche der realen Umgebung nahe kommt (Stadt oder Land sowie weitere Umgebungsdetails);
d) Detailgetreue Umsetzung von Verkehrsschildern der Ausfahrt;
e) Ausgabe von Ausfahrtsnummern;
f) Schriftfarbe und Schilderfarbe bei Verkehrsschildern;
g) Korrekte Anordnung verschiedener Textzeilen und Symbole auf Verkehrsschildern, zum Beispiel ein Zeichen für einen Flugplatz hinter oder vor einer bestimmten Textzeile auf dem Verkehrsschild oder das Zeichen für eine Bundesstraße.

Zu beachten ist, dass bei der erfindungsgemäßen Lösung die Visualisierungsschichten in beliebiger Reihenfolge überlagert werden können. Es könnte also die erste mit der dritten und/oder vierten Visualisierungsschicht oder die zweite mit der dritten und/oder vierten oder mit weiteren Visualisierungsschichten überlagert werden. Grundvoraussetzung ist jedoch stets, dass zumindest eine Visualisierungsschicht zur Darstellung der Strecke vorhanden ist.

Besonders bevorzugt wird das erfindungsgemäße Verfahren bei Autobahnausfahrten oder Gabelungen angewendet, weil der Datenbestand grafisch aufbereiteter so genannter Reality-View-Images in den Wegenetzdatenbanken diesbezüglich nicht vollständig ist und aufgrund der Dynamisierung auch im Datenbestand nicht vorhandene Übergänge mittels der Erfindung abgedeckt werden können.

Im Folgenden wird die Erfindung anhand von schematischen Zeichnungen, welche lediglich Ausführungsbeispiele zeigen, näher erläutert.

Es zeigen:
- Fig. 1: eine sogenannte Reality View (Perspektivdarstellung);
- Fig. 2: ebenfalls eine sogenannte Reality View;
- Fig. 3: eine sogenannte LaneInfo (Spurensituation) mit SignPost (Richtungsinformationen);
- Fig. 4: eine Visualisierungsschicht mit Straßeninformationen;
- Fig. 5: eine Visualisierungsschicht mit Hintergrundinformationen;
- Fig. 6: die Überlagerung zweier Visualisierungsschichten;
- Fig. 7: eine Visualisierungsschicht mit Spurinformationen;
- Fig. 8: die Überlagerung dreier Visualisierungsschichten;

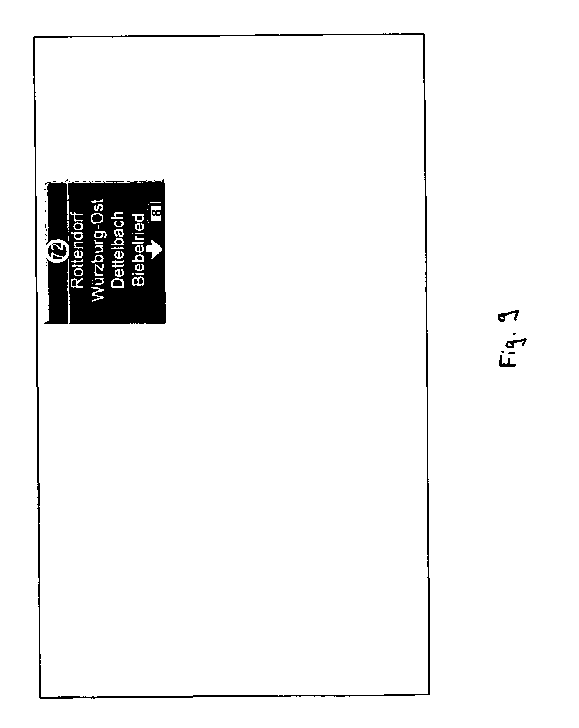

- Fig. 9: eine Visualisierungsschicht mit Textinformation;
- Fig. 10: die Überlagerung von vier Visualisierungsschichten;
- Fig. 11: zusätzlich eingeblendete Navigationsinformationen.

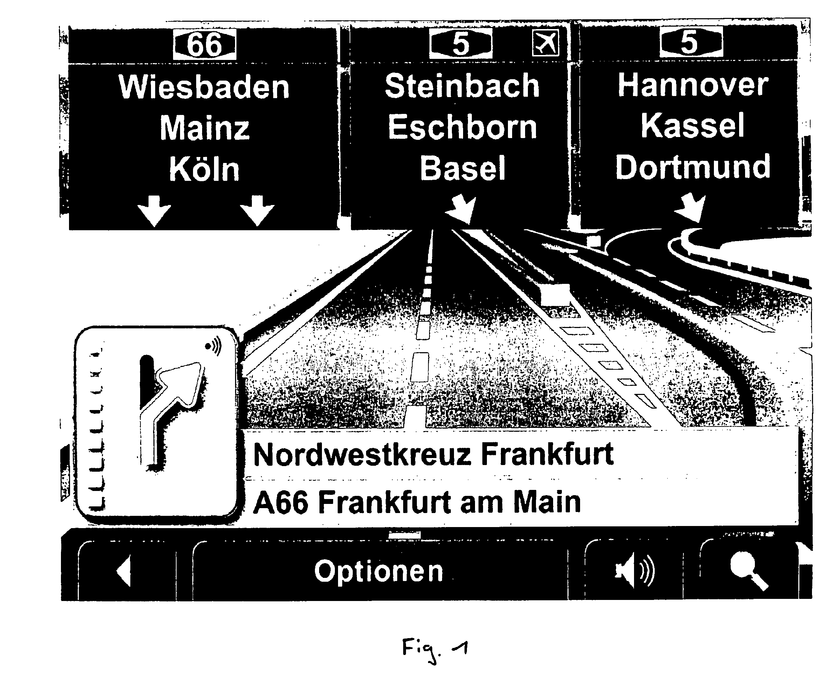

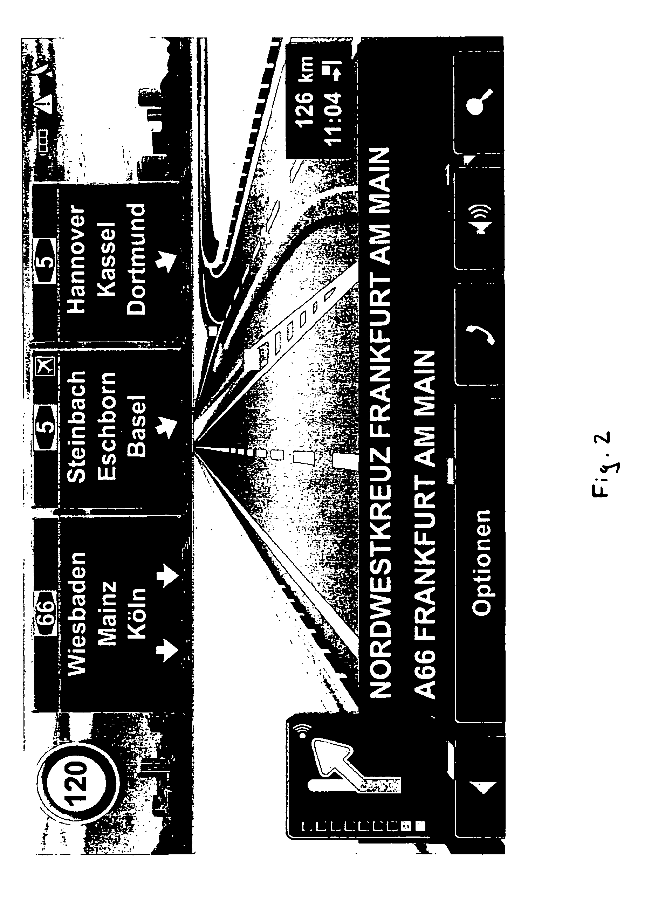

Fig. 1 und Fig. 2 zeigen das bekannte Reality-View-Prinzip. Es wird ein Bild für eine Autobahnkreuzung basierend auf statisch vorhandenem Ausgangsbildmaterial speziell zu dieser betroffenen Autobahnkreuzung perspektivisch angezeigt. Die Erzeugung von Reality-Views ist technisch generell für jede Kreuzung denkbar, allerdings ist durch die vorher zu leistende manuelle Erfassung der Kreuzungen durch den Kartenhersteller und die Speicherung der gewonnen Daten eine Beschränkung der Abdeckung zu erwarten, da aus Kostengründen nicht alle Kreuzungen vom Kartenhersteller abgefahren und gespeichert werden können.

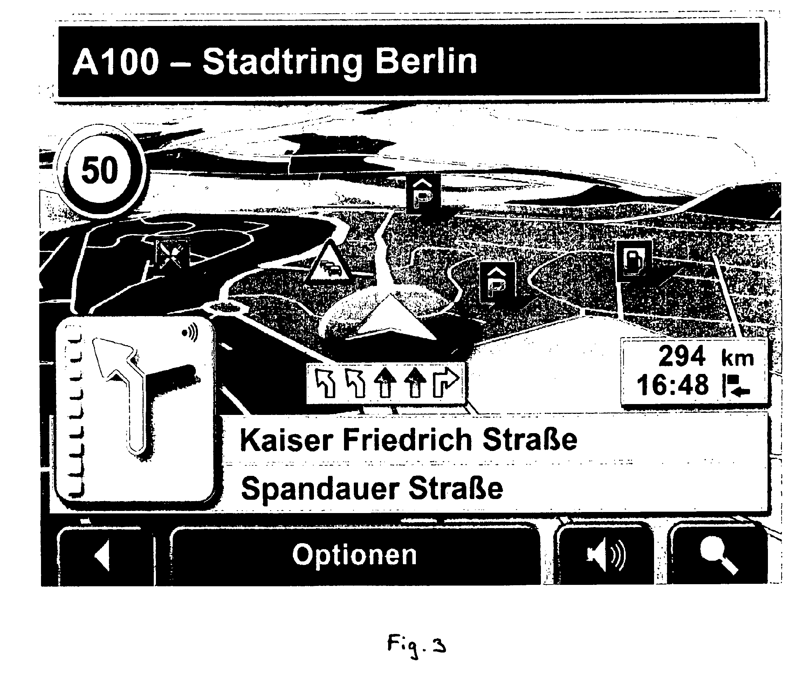

Fig. 3 zeigt das bekannte LaneInfo-Prinzip. Aus dem Kartenmaterial werden Informationen bezüglich der an der Abbiegesituation vorherrschenden Spurensituation ermittelt und während der Navigation angezeigt. Die reine Errechnung der Spurensituation ermöglicht es jedoch nicht, ein Bild der Ausfahrt mit hohem Wiedererkennungswert für den Benutzer zu generieren. Das in Fig. 3 gezeigte Anzeigemittel stellt ebenfalls die Richtungsangabe und die Ausfahrtsnummer (SignPost) bei einer Kreuzung oder Ausfahrt im Navigationsfenster dar. Die Anzeige beschränkt sich jedoch nur auf einen Teil der zur Verfügung stehenden Information und wird lediglich einzeilig wiedergegeben, ohne dass das eigentliche Ziel berücksichtigt bzw. gekennzeichnet ist.

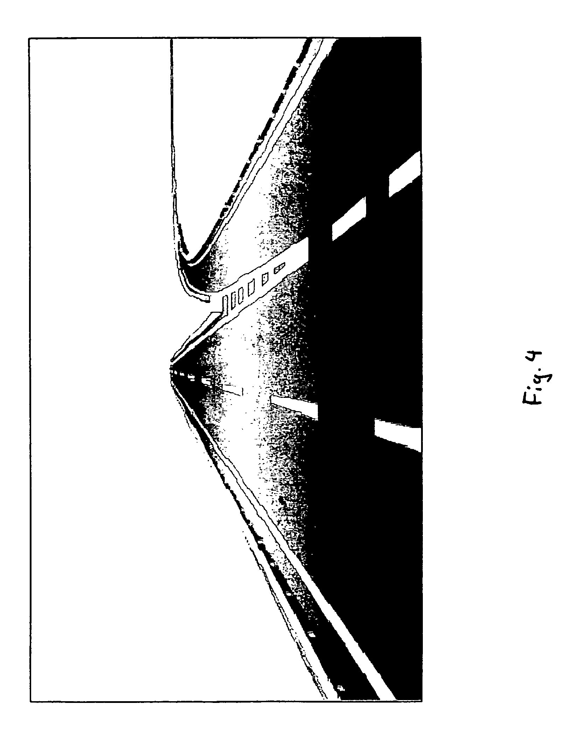

Die folgenden Figuren zeigen nun anhand eines konkreten Beispiels, wie die erfindungsgemäße Einrichtung eine erfindungsgemäße Visualisierung der Autobahnausfahrt mit der Nummer 72 auf der Autobahn A3 Richtung Würzburg/Heidingsfeld erstellt. In der realen Beschilderung am Straßenrand finden sich in der Art einer Aufzählung verschiedene Informationen auf den Schildern, die den Fahrer über die kommende Ausfahrt informieren. Diese Information ist natürlich auch mittels der Wegenetzdatenbank, auf die das Navigationsgerät Zugriff hat, für das Navigationsgerät zugänglich. Basierend auf dieser Information wird die Spuren-Anzahl, beispielsweise mittels der LaneInfo-Funktion (siehe Beschreibung weiter oben), angefordert. Als Ergebnis wird eine vorgenerierte Basisansicht (2 Spuren auf Schnellstraße geradeaus, eine Spur geht auf der rechten Seite ab) von der Einrichtung bereitgestellt. Eine solche Visualisierungsschicht ist in Fig. 4 dargestellt.

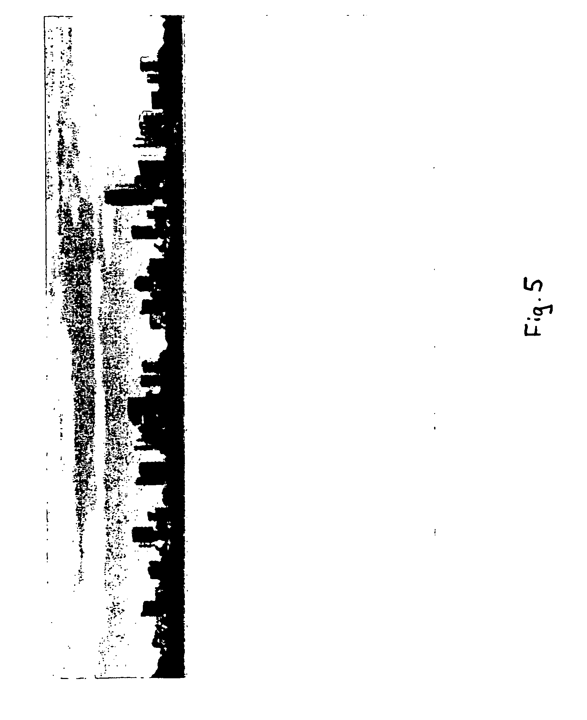

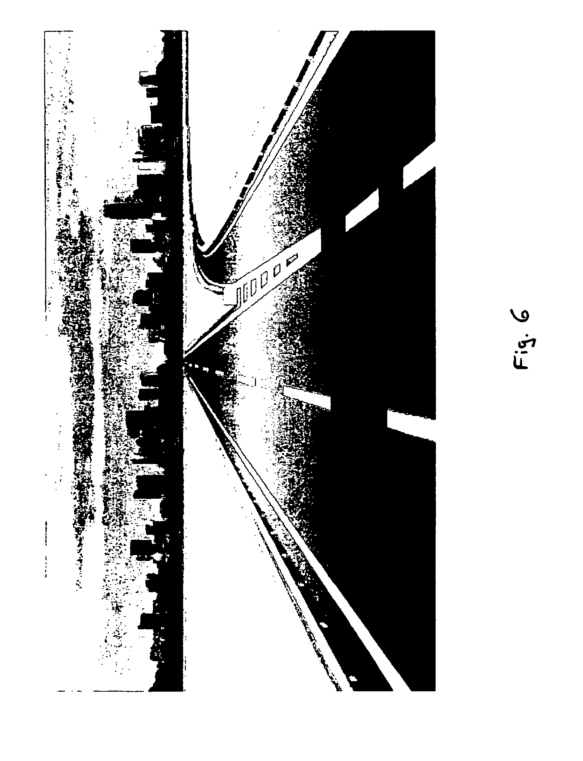

Zusätzlich wird passend zur realen Umgebung ein Hintergrundbild von der Einrichtung als weitere Visualisierungsschicht bereitgestellt, siehe Fig. 5. Da der darzustellende Straßenverlauf einen Verlauf der Straße geradeaus ohne Brücke repräsentiert, werden nun beide aus Fig. 4 und 5 bekannten Visualisierungsschichten mittels einer ersten dynamischen Überlagerung zusammengefasst. Im gezeigten Beispiel ist auch die Uhrzeit berücksichtigt, was zu einer Tag-Ansicht mit Stadt-Hintergrund führt, da unweit der Ausfahrt in Fahrtrichtung ein Bebauungsgebiet von der Einrichtung während der Auswertung der Wegenetzdatenbank erkannt wurde. Fig. 6 zeigt diese kombinierte Ansicht.

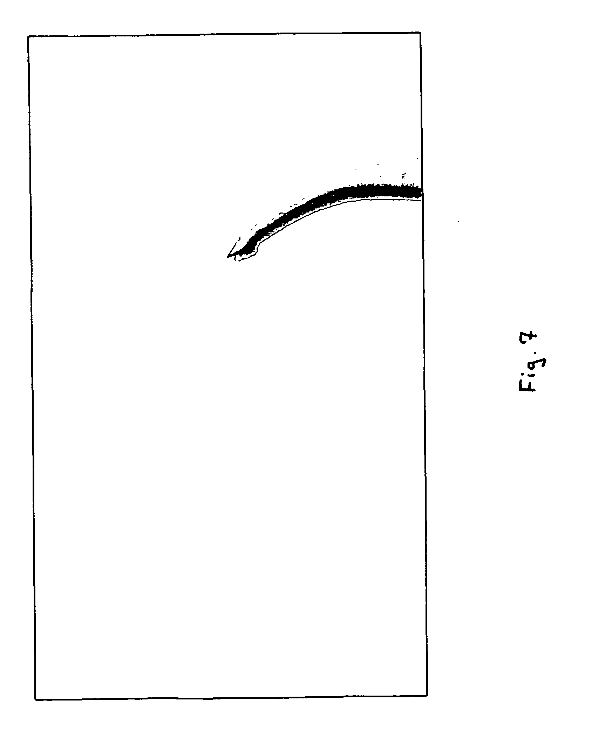

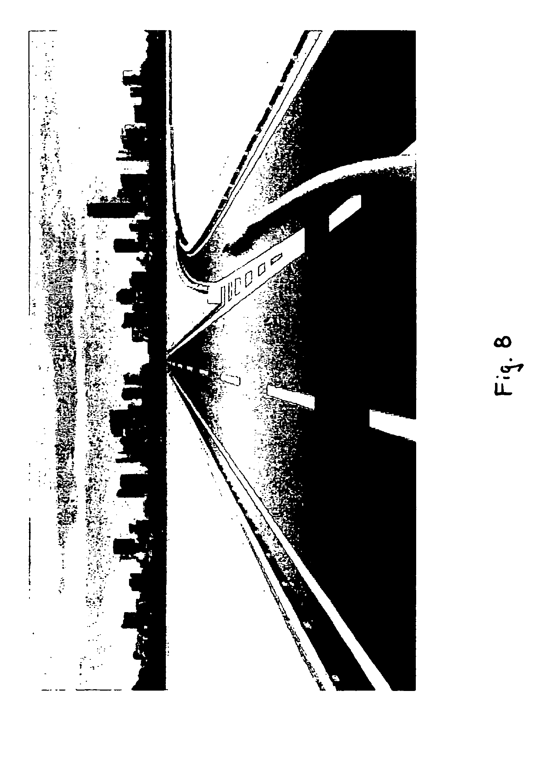

Für Spurenverläufe etc. stehen der Einrichtung Symbole mittels einer weiteren Visualisierungsschicht zur Verfügung. In Fig. 7 ist gezeigt, wie ein solches Symbol beispielsweise dargestellt werden könnte. Diese Schicht wird nun mit den bisher beschriebenen Visualisierungsschichten überlagert. Als Resultat zeigt Fig. 8 den für die Verfolgung des ermittelten Streckenverlaufes erforderlichen Wegeübergang, dem der Fahrzeugführer folgen soll. Das dargestellte Pfeilsymbol wird in den geeigneten Spurenverlauf unter Berücksichtigung der tatsächlich vorhandenen Fahrspuren von der Einrichtung eingezeichnet oder eingeblendet. Bisher wurden demnach drei Visualisierungsschichten verwendet, um die perspektivische Darstellung eines Übergangs erfindungsgemäß dynamisch zu erzeugen.

Nun wird mittels einer vierten Visualisierungsschicht eine weitere sehr wichtige Information für den Benutzer mit den bisher vorhandenen drei Visualisierungsschichten verschmolzen, nämlich ein Hinweisschild bezüglich der möglichen Zielorte und Straßennummern. Mittels der Wegenetzdatenbank und der aktuellen Position erkennt die Einrichtung die Existenz solcher Informationen und erstellt daraufhin selbsttätig ein Rechteck mit beispielsweise blauem Hintergrund und beispielsweise weißer Schrift zur Repräsentation eines möglichst naturgetreuen Autobahnhinweisschildes (für Deutschland übliche Darstellung). Es wurden vier Zeilen mit den Texten Rottendorf, Würzburg-Ost, Dettelbach und Biebelried in jeweils einer getrennten Zeile erzeugt. Zusätzlich wurde die Ausfahrtsnummer "72", welche ebenfalls von der Einrichtung in das Rechteck eingebracht wird, erzeugt. Ein weiterer von der Einrichtung in das Schild eingefügter so genannter Tag (Teilmenge des darzustellenden Schildes) symbolisiert die Bundesstraße "B8". Es wurden die Position des Tags sowie die Farbe des Rahmens, der Schrift und des Hintergrundes sowie die Größe und Position des Tags von der Einrichtung berücksichtigt. In der Regel sind diese Informationen aus den Daten der digitalen Karte auslesbar und werden von der Einrichtung beim Zugriff auf die Kartendaten herausgefiltert. Sollte diese Information im Kartenmaterial fehlen, so kann die Einrichtung derart realisiert sein, dass mit abrufbaren Vorgaben für die Gestaltung von Verkehrsschildern mittels der Einrichtung beispielsweise landesspezifische Informationen in einem Vorverarbeitungsschritt oder zur Laufzeit von der Einrichtung selbst eingebracht und für die Anzeige genutzt werden. In diesem Beispiel wurde der Tag ebenfalls in das Schild, welches mittels der Visualisierungsschicht dargestellt werden soll, mit eingebaut. Ferner wäre nun denkbar (nicht gezeigt), die gewünschte Fahrtrichtung bzw. den gewünschten Zielort oder den als nächstes auf dem Streckenverlauf liegenden Ort am Schild zu markieren. Möchte der Nutzer beispielsweise nach Dettelbach fahren, so wäre es möglich, dass die Einrichtung die Zeile "Dettelbach" mittels geeigneter Visualisierung besonders markiert, beispielsweise umrahmt oder farblich hinterlegt.

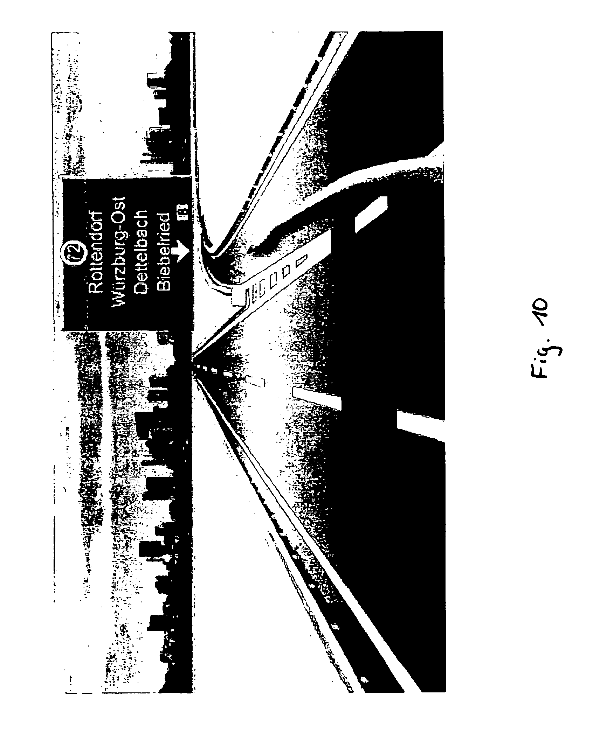

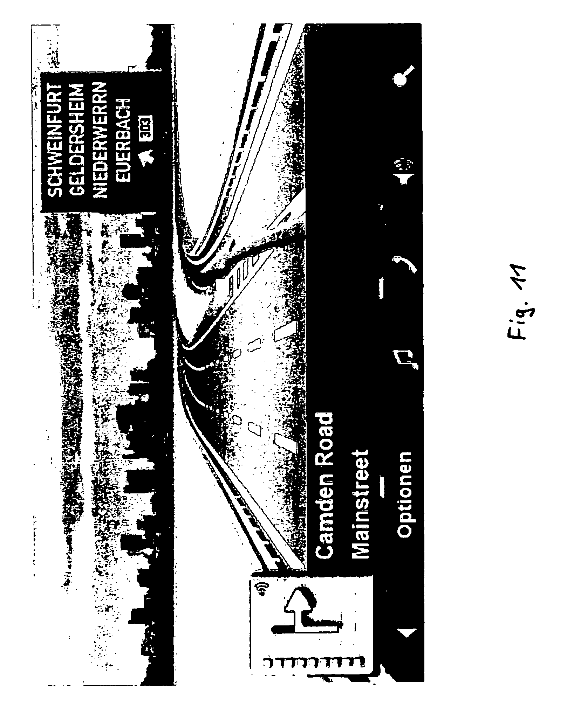

Die fertig gestellte Überlagerung aller vier Visualisierungsschichten ist in Fig. 10 gezeigt. Fügt man nun noch die navigationsrelevanten Anweisungen hinzu, erhält man den finalen Screenshot aus der laufenden Navigationsanwendung, wie er für den Benutzer während des komplexes Übergangsmanövers am Anzeigemittel seiner Navigationseinrichtung erfindungsgemäß durch Umschaltung der Betriebsart selbsttätig sichtbar wird (Fig. 11). Nach Passieren des Übergangs erfolgt das selbsttätige Ausblenden mittels der Einrichtung. Zu bemerken wäre noch, dass dieses Bild nicht aus spezifischem und für jeden Übergang in einem Speichermittel abgelegtem Bildmaterial besteht, sondern dynamisch von der Einrichtung während des Betriebs, zumindest ab dem Zeitpunkt, ab dem der Streckenverlauf bzw. der Startpunkt und der Zielpunkt bekannt sind, erzeugt wurde.

Zusammenfassend seien noch einmal einige von der Einrichtung zur Verfügung gestellte Verfahrensschritte aufgelistet, die in beliebiger Reihenfolge und Zusammensetzung zur Anwendung kommen können. Die Auflistung ist nicht als abschließend zu betrachten und je nach Geräteversion können Verfahrensschritte fehlen oder optional zur Verfügung gestellt sein. Die Erstellung der perspektivischen Visualisierung mittels der erfindungsgemäßen Einrichtung kann beispielsweise wie folgt realisiert sein, wobei die Nummerierung nicht zwingend die Reihenfolge angibt, gemäß derer die Schritte durchzuführen sind:
1. Ermittlung einer für die Streckenführung relevanten Autobahnausfahrt.
2.Ermittlung der Fahrspurensituation vor und/oder an und/oder nach der Ausfahrt.
3. Ermittlung der Wegesituation, insbesondere der Kurvensituation für eine Teilstrecke nach der Autobahnausfahrt, zur Definition einer Visualisierungsschicht, welche beispielsweise eine nachfolgende starke Links- oder Rechtskurve für den Benutzer am Anzeigemittel visualisiert.
4. Ermittlung der Elevations-Daten der Autobahnausfahrt mittels Zugriff auf die Wegenetzdatenbank eines Kartenherstellers zur Ermittlung einer weiteren erforderlichen Visualisierungsschicht, um beispielsweise den Verlauf der abfahrenden Straße nach der Ausfahrt möglichst realitätsnah durch geeignete vorhandene Bilddatensätze und/oder Visualisierungsschichten darzustellen, welche beispielsweise eine Brücke oder eine Unterführung berücksichtigen. Die Brücke wäre erforderlich, wenn die nachfolgende Streckenführung über die Autobahn hinweg führt und die Unterführung wäre erforderlich, wenn die nachfolgende Streckenführung unter der Autobahn hindurch führt.
5. Erfassung und Visualisierung weiterer spezieller Eigenschaften der Ausfahrt und der näheren Umgebung. So könnte beispielsweise auch ein Tunneleingang einige Entfernung nach der Autobahnausfahrt mittels eines geeigneten Bilddatensatzes und/oder einer geeigneten Visualisierungsschicht visualisiert werden. Denkbar wäre es auch, eine Ausfahrt in einem Tunnel oder einer Brücke direkt im Anschluss an die Ausfahrt entsprechend zu visualisieren.
6. Ermittlung der Uhrzeit für die automatische Generierung eines Bildes bei Tag- oder Nachansicht.
7. Ermittlung, ob sich die Ausfahrtsituation in einem bebauten Gebiet befindet oder sich außerhalb eines bebauten Gebietes befindet, um einen entsprechenden Bilddatensatz mit passendem Hintergrundbild mit einfließen zu lassen. Beispiel: Hintergrundwahl eines Bildes mit Hochhäusern oder einer freiflächigen Landschaft. Sofern sich die Ausfahrt innerhalb eines Tunnels befindet, wird dies ebenfalls bei der Auswahl eines geeigneten Bilddatensatzes bzw. einer geeigneten Visualisierungsschicht berücksichtigt.
8. Bereitstellung von Visualisierungsschichten für die Navigationsansicht unter Berücksichtigung der Straßen- und Spurensituation entsprechend der realen Ansicht.
9. Als weitere Visualisierungsschicht zeichnet die Einrichtung eine Visualisierungsschicht mit Pfeilen ein, die die ausfahrenden Fahrspuren kennzeichnen, die für den jeweiligen Routingfall entsprechend sinnvoll sind. Gehen mehrere Fahrspuren von der Autobahn ab, können wahlweise alle, eine oder mehrere Spuren als zu fahrende Spur gekennzeichnet werden, abhängig von der Anschlusssituation nach der Abfahrt.
10. Ermittlung der relevanten Informationen zur Beschriftung von zu visualisierenden Verkehrsschildern mittels einer weiteren Visualisierungsschicht, wobei folgende Informationen unter anderem durch Berücksichtigung der Wegenetzdatenbank berücksichtigt werden: Hintergrundfarbe und Schriftwahl (vorzugsweise für jede Zeile separat) für ein darzustellendes Verkehrsschild oder die Aufbringung weiterer Informationen, die üblicherweise auf Verkehrsschildern angezeigt werden, beispielsweise die Ausfahrtsnummer der zu folgenden Ausfahrt, zusätzliche Tags auf dem Ausfahrtsschild und beispielsweise die Schriftfarbe, Linienfarbe, Hintergrundfarbe des Tags, spezielle Zeichen z.B. für Flughäfen, Position des Tags vor oder nach dem Ortsnamen innerhalb einer Zeile. Routenummern von Sign Boards oder Routenummern der einzelnen Straßen, die Reihenfolge der einzelnen Zeilen und somit die richtige Reihenfolge der Ortsnamen auf dem Schild spielen ebenfalls eine Rolle.
11.Anzeigen aller Visualisierungsschichten mit navigationsrelevanten Informationen (Advisor, etc.) als ein dynamisches perspektivisches Gesamtbild an einer Autobahnausfahrt vorzugsweise nach vorgebbaren Regeln.

## Patentansprüche

1. Einrichtung zur Ermittlung und Anzeige eines von einem Wegenetz umfassten Streckenverlaufes für ein Fortbewegungsmittel, insbesondere Navigationsgerät, mit einer
Datenverarbeitungseinrichtung, welche auch zur Ermittlung des Streckenverlaufes dient, und mit einem Anzeigemittel, welches auch zur Visualisierung des ermittelten Streckenverlaufes dient,
wobei die Einrichtung zumindest zeitweise Zugriff auf eine Wegenetzdatenbank hat **und wobei** die Einrichtung derart eingerichtet ist,
**eine** für die Verfolgung des ermittelten Streckenverlaufes erforderliche Korrektur der aktuellen Richtung des Fortbewegungsmittels, welche durch einen Übergang des Streckeilverlaufes von einem ersten Weg auf einen zweiten Weg bedingt ist, insbesondere durch eine Wegekreuzung oder durch eine Wegeverzweigung, zu ermitteln und bei Vorliegen einer für die Verfolgung des ermittelten Streckenverlaufes erforderlichen Korrektur der aktuellen Richtung des Fortbewegungsmittels einen selbsttätigen Wechsel zwischen zumindest einer ersten und einer zweiten Betriebsart durchzuführen,
wobei eine der zumindest zwei Betriebsarten eine Visualisierung des Übergangs am Anzeigemittel durch zumindest teilweise dynamische Überlagerung zumindest zweier Visualisierungsschichten bewirkt,
wobei ein sofortiges Deaktivieren der Visualisierung des Übergangs erfolgt, sobald der Übergang mittels des Fortbewegungsmittels von einem Benutzer der Einrichtung passiert wurde,
**dadurch gekennzeichnet, dass**
die Einrichtung derart eingerichtet ist, eine Analyse der Streckensituation, insbesondere Kurvensituation, für die zumindest abschnittsweise nachfolgende Strecke nach dem Übergang durchzuführen, und für die Visualisierung des Übergangs eine Visualisierungsschicht zu erzeugen, die diese Analyse berücksichtigt.

2. Einrichtung nach Anspruch 1,
**dadurch gekennzeichnet,**
**dass** die Einrichtung derart eingerichtet ist, dass mittels der Wegenetzdatenbank verfügbare und für den Streckenverlauf relevante Informationen ermittelbar sind und bei der Visualisierung berücksichtigt werden.

3. Einrichtung nach Anspruch 2,
**dadurch gekennzeichnet,**
**dass** sich die Informationen auf die reale Beschilderung des vom Streckenverlauf umfassten Wegenetzes beziehen und insbesondere Mittel zur Anordnung von streckenverlaufsspezifischen Kennzeichen auf der Beschilderung vorgesehen sind.

4. Einrichtung nach einem der vorhergehenden Ansprüche,
**dadurch gekennzeichnet,**
**dass** die Einrichtung derart eingerichtet ist, dass das Land, in dem die Einrichtung betrieben wird, ermittelbar ist, wobei zumindest eine Visualisierungsschicht zumindest teilweise unter Berücksichtigung des Landes, insbesondere spiegelverkehrt und/oder durch Verwendung landesspezifischer Farben, am Anzeigemittel darstellbar ist.

5. Einrichtung nach einem der vorhergehenden Ansprüche,
**dadurch gekennzeichnet,**
**dass** eine Visualisierungsschicht zumindest einen Bilddatensatz umfasst.

6. Einrichtung nach einem der vorhergehenden Ansprüche,
**dadurch gekennzeichnet,**
**dass** die Überlagerung auch nach Maßgabe zumindest eines Überlagerungssteuerparameters und/oder eines Überlagerungsregelwerkes realisiert ist.

7. Einrichtung nach einem der vorhergehenden Ansprüche,
**dadurch gekennzeichnet,**
**dass** auch eine Visualisierungsschicht mit zumindest einer fotografischen oder videografischen Aufnahme des realen Übergangs vorgesehen ist.

8. Einrichtung nach einem der vorhergehenden Ansprüche,
**dadurch gekennzeichnet,**
**dass** auch eine Visualisierungsschicht mit zumindest einer dreidimensionalen und/oder fotorealistisch gerenderten Aufnahme des realen Übergangs vorgesehen ist.

9. Einrichtung nach einem der vorhergehenden Ansprüche,
**dadurch gekennzeichnet,**
**dass** auch eine Visualisierungsschicht zur Darstellung für zumindest eine grafische Kurve bzw. zumindest einen durchgehenden Pfeil zur Symbolisierung des ermittelten Streckenverlaufes vorgesehen ist.

10. Einrichtung nach einem der vorhergehenden Ansprüche,
**dadurch gekennzeichnet,**
**dass** auch eine Visualisierungsschicht mit einem beweglichen bzw. veränderlichen grafischen Element vorgesehen ist, wobei das grafische Element den aktuellen Standort der Einrichtung symbolisiert.

11. Einrichtung nach einem der vorhergehenden Ansprüche,
**dadurch gekennzeichnet,**
**dass** auch eine Visualisierungsschicht mit weiteren grafischen Elementen vorgesehen ist, insbesondere mit Verkehrsschildern, Brücken, Unterführungen, Points of Interest, Icons, Tunneln, Gebäudesilhouetten oder Landschaftsmerkmalen, in Anlehnung an die reale Umgebung des Wegeübergangs.

12. Einrichtung nach einem der vorhergehenden Ansprüche,
**dadurch gekennzeichnet,**
**dass** die Visualisierungsschichten zumindest teilweise unabhängig voneinander von der Einrichtung umfasst sind.

13. Verfahren zum Betrieb einer Einrichtung zur Ermittlung und Anzeige eines von einem Wegenetz umfassten Streckenverlaufes für ein Fortbewegungsmittel, insbesondere Navigationsgerät, mit Datenverarbeitungseinrichtung, welche auch zur Ermittlung des Streckenverlaufes dient und mit einem Anzeigemittel, welches auch zur Visualisierung des ermittelten Streckenverlaufes dient,
wobei die Einrichtung zumindest zeitweise Zugriff auf eine Wegenetzdatenbank hat und wobei folgende Verfahrensschritte umfasst sind:
a) Darstellung der Bewegungsrichtung des Fortbewegungsmittels innerhalb des zumindest teilweise am Anzeigemittel dargestellten Wegenetzes im Rahmen einer ersten Betriebsart;
b) Ermittlung einer erforderlichen Richtungsänderung, welche für die Verfolgung des ermittelten Streckenverlauf mittels des Fortbewegungsmittels erforderlich ist und welche durch einen Übergang von einem ersten Weg des Wegenetzes auf einen zweiten Weg des Wegenetzes bedingt ist, insbesondere durch eine Wegekreuzung oder durch eine Wegeverzweigung oder durch eine Autobahnausfahrt;
**c)** Bei Vorliegen einer für die Verfolgung des ermittelten Streckenverlaufes erforderlichen Korrektur der aktuellen Richtung des Fortbewegungsmittels selbsttätiger Wechsel von der ersten Betriebsart auf eine zweite Betriebsart im Rahmen derer eine Visualisierung des Übergangs am Anzeigemittel erfolgt, wobei zur Visualisierung eine zumindest teilweise dynamische Überlagerung von zumindest zwei Visualisierungsschichten erfolgt,
wobei ein sofortiges Deaktivieren der Visualisierung des Übergangs erfolgt, sobald der Übergang mittels des Fortbewegungsmittels von einem Benutzer der Einrichtung passiert wurde,
**gekennzeichnet durch** die Verfahrensschritte:
**d)** Analyse der Streckensituation, insbesondere Kurvensituation, für die zumindest abschnittsweise nachfolgende Strecke nach dem Übergang, und
**e)** Erzeugung einer Visualisierungsschicht für die Visualisierung des Übergangs, unter Berücksichtigung dieser Analyse.

14. Verfahren nach einem der vorhergehenden Verfahrensansprüche, **dadurch gekennzeichnet,**
**dass** auch die Charakteristika der am Übergang beteiligten Wege ermittelt und berücksichtigt werden, insbesondere die Anzahl der Fahrspuren, Links/Rechts-Verkehr, geometrische Eigenschaften der Fahrspuren oder Überführungssituationen und/oder Unterführungssituationen.

15. Verfahren nach einem der vorhergehenden Verfahrensansprüche, **dadurch gekennzeichnet,**
**dass** auch weitere bezüglich des am Übergang beteiligten Wegenetzes relevante Informationen ermittelt und berücksichtigt werden, insbesondere Informationen bezüglich der realen Beschilderung der Wege, wobei die Darstellung von Schildern insbesondere unter Berücksichtigung des Landes erfolgt, in dem die Einrichtung betrieben wird.

16. Verfahren nach einem der vorhergehenden Verfahrensansprüche, **dadurch gekennzeichnet,**
**dass** auch die aktuelle lokale Tageszeit ermittelt und berücksichtigt wird.

17. Verfahren nach einem der vorhergehenden Verfahrensansprüche, **dadurch gekennzeichnet,**
**dass** auch die Charakteristika der am Übergang vorherrschenden Umgebungsbedingungen ermittelt und berücksichtigt werden, insbesondere das Vorhandensein von Brücken, Unterführungen, Points of Interest, Icons, Tunneln, Gebäudesilhouetten, Landschaftsmerkmalen oder Beschilderung.

18. Verfahren nach einem der vorhergehenden Verfahrensansprüche, **dadurch gekennzeichnet,**
**dass** zusätzlich eine zumindest teilweise Überlagerung einer Visualisicrungsschicht erfolgt, welche zur Kennzeichnung des Streckenverlaufes entlang des Übergangs weitere Mittel umfasst, insbesondere zumindest ein Pfeilsymbol zur Symbolisierung eines mittels des Fortbewegungsmittels vorzunehmenden Richtungswechsels und/oder Fahrspurwechsels.

19. Verfahren nach einem der vorhergehenden Verfahrensansprüche, **dadurch gekennzeichnet,**
**dass** zusätzlich eine zumindest teilweise Überlagerung einer Visualisierungsschicht erfolgt, welche zur Visualisierung von mittels der Wegenetzdatenbank ermittelten streckenspezifischen und/oder ortsspezifischen Informationen dient.

20. Verfahren nach einem der vorhergehenden Verfahrensansprüche, **dadurch gekennzeichnet,**
**dass** zusätzlich eine zumindest teilweise Überlagerung weiterer Visualisierungsschichten zur Darstellung weiterer von mittels der Wegenetzdatenbank ermittelter Informationen und/oder während des Betriebs der Einrichtung oder im Vorfeld ermittelter navigationsrelevanter Informationen dient.

21. Verfahren nach einem der vorhergehenden Verfahrensansprüche, **dadurch gekennzeichnet,**
**dass** eine Visualisierungsschicht zumindest einen Bilddatensatz umfasst, welcher bei der Überlagerung berücksichtigt wird.

22. Verfahren nach einem der vorhergehenden Verfahrensansprüche, **dadurch gekennzeichnet,**
**dass** die Überlagerung der Visualisierungsschichten nach Maßgabe zumindest eines Visualisierungssteuerparameters und/oder Visualisierungsregelwerkes erfolgt.

23. Verfahren nach einem der vorhergehenden Verfahrensansprüche, **dadurch gekennzeichnet,**
**dass** zumindest eine Visualisierungsschicht zumindest teilweise derart bearbeitet wird, dass die zu visualisierende Information auch spiegelverkehrt zur Darstellung am Anzeigemittel verfügbar ist.

24. Verfahren nach einem der vorhergehenden Verfahrensansprüche, **dadurch gekennzeichnet,**
**dass** zumindest ein streckenverlaufsspezifisches Kennzeichen für eine mittels zumindest einer Visualisierungsschicht dargestellte Beschilderung in die Beschilderung eingeblendet wird.

## Claims

1. Device for ascertaining and displaying a route course comprised by a road network for a transportation means, in particular a navigation device, having a data processing device, which is also used for ascertaining the route course, and having a display means, which is also used to visualize the ascertained route course, wherein the device has at least temporary access to a road network database, and wherein the device is set up to determine a correction of the current direction of the transportation means necessary for following the ascertained route course, which is caused by a transition of the route course from a first road onto a second road, in particular by a road intersection or by a road branch, and to perform an automatic change between at least one first and one second operating mode upon the existence of a correction of the current direction of the transportation means necessary for following the ascertained route course,
wherein one of the at least two operating modes causes a visualization of the transition on the display means by at least partial dynamic superposition of at least two visualization layers, wherein an immediate deactivation of the visualization of the transition occurs as soon as the transition has been passed by a user of the device using the transportation means, **characterized in that**
the device is set up to perform an analysis of the route situation, in particular the curve situation, for the at least sectionally subsequent route following the transition, and to generate a visualisation layer for the visualization of the transition, which takes said analysis into consideration.

2. The device according to Claim 1,
**characterized in that**
the device is set up in such a way that, using the road network database, available information relevant for the route course may be ascertained and taken into consideration in the visualization.

3. The device according to Claim 2,
**characterized in that**
the information relates to the real signage of the road network comprised by the route course and in particular means for situating identifiers specific to the route course are provided on the signage.

4. The device according to one of the preceding claims,
**characterized in that**
the device is set up in such a way that the country in which the device is operated may be ascertained, at least one visualization layer being able to be shown on the display means at least partially in consideration of the country, in particular mirror-reversed and/or by using country-specific colors.

5. The device according to one of the preceding claims,
**characterized in that**
a visualization layer comprises at least one image data set.

6. The device according to one of the preceding claims,
**characterized in that**
the superposition is also implemented in accordance with at least one superposition control parameter and/or one superposition policy.

7. The device according to one of the preceding claims,
**characterized in that**
a visualization layer having at least one photographic or videographic picture of the real transition is also provided.

8. The device according to one of the preceding claims,
**characterized in that**
a visualization layer having at least one three-dimensionally and/or photorealistically rendered picture of the real transition is also provided.

9. The device according to one of the preceding claims,
**characterized in that**
a visualization layer is also provided for the representation of at least one graphic curve and/or at least one continuous arrow to symbolize the ascertained route course.

10. The device according to one of the preceding claims,
**characterized in that**
a visualization layer having a mobile and/or changeable graphic element is also provided, the graphic element symbolizing the current location of the device.

11. The device according to one of the preceding claims,
**characterized in that**
a visualization layer having further graphic elements is also provided, in particular having traffic signs, bridges, underpasses, points of interest, icons, tunnels, building silhouettes, or landscape features, based on the real surroundings of the road transition.

12. The device according to one of the preceding claims, **characterized in that**
the visualization layers are comprised by the device at least partially independently from one another.

13. Method for operating a device for ascertaining and displaying a route course for a transportation means comprised by a road network, in particular a navigation device, having a data processing device, which is also used to ascertain the route course, and having a display means, which is also used to visualize the ascertained route course, wherein the device has access to a road network database at least temporarily, and wherein the following method steps are comprised:
a) showing the movement direction of the transportation means within the road network, which is at least partially shown on the display means, in the context of a first operating mode;
b) ascertaining a required direction change which is necessary for following the ascertained route course using the transportation means and which is caused by a transition from a first road of the road network onto a second road of the road network, in particular by a road intersection or by a road branch or by a freeway exit;
c) automatically changing from the first operating mode to a second operating mode in the context of which a visualization of the transition on the display means occurs, upon the existence of a correction of the current direction of the transportation means necessary for following the ascertained route course, wherein an at least partial dynamic superposition of at least two visualization layers is performed, wherein an immediate deactivation of the visualization of the transition occurs as soon as the transition has been passed by a user of the device using the transportation means, **characterized by** the following method steps:
d) analyzing the route situation, in particular the curve situation, for the at least partially subsequent route following the transition, and
e) generating a visualization layer for the visualization of the transition in consideration of said analysis.

14. The method according to one of the preceding method claims, **characterized in that**
the characteristics of the roads participating at the transition are also ascertained and taken into consideration, in particular the number of lanes, left/right-hand traffic, geometric properties of the lanes, or overpass situations and/or underpass situations.

15. The method according to one of the preceding claims, **characterized in that**
further information relevant in regard to the road network participating at the transition is also ascertained and taken into consideration, in particular information in regard to the real signage of the road, the representations of signs being performed in particular taking into consideration the country in which the device is operated.

16. The method according to one of the preceding method claims, **characterized in that**
the current local time of day is also ascertained and taken into consideration.

17. The method according to one of the preceding method claims, **characterized in that**
the characteristics of the environmental conditions prevailing at the transition are also ascertained and taken into consideration, in particular the presence of bridges, underpasses, points of interest, icons, tunnels, building silhouettes, landscape features, or signage.

18. The method according to one of the preceding method claims, **characterized in that**,
in addition, an at least partial superposition of a visualization layer is performed, which comprises further means for identifying the route course along the transition, in particular at least one arrow to symbolize a direction change and/or lane change to be performed using the transportation means.

19. The method according to one of the preceding method claims, **characterized in that**,
in addition, an at least partial superposition of a visualization layer is performed, which is used to visualize route-specific and/or location-specific information ascertained using the road network database.

20. The method according to one of the preceding method claims, **characterized in that**,
in addition, an at least partial superposition of further visualization layers is used to represent further information ascertained using the road network database and/or navigation-relevant information ascertained during the operation of the device or beforehand.

21. The method according to one of the preceding method claims, **characterized in that**
a visualization layer comprises at least one image data set which is taken into consideration during the superposition.

22. The method according to one of the preceding method claims, **characterized in that**
the superposition of the visualization layers is performed in accordance with at least one visualization control parameter and/or visualization policy.

23. The method according to one of the preceding method claims, **characterized in that**
at least one visualization layer is at least partially processed in such a way that the information to be visualized is also available for display on the display means mirror-reversed.

24. The method according to one of the preceding method claims, **characterized in that**
at least one identifier specific to the route course for signage shown using at least one visualization layer is incorporated in the signage.

## Revendications

1. Dispositif pour déterminer et afficher un itinéraire inclus dans un réseau routier pour un moyen de transport, en particulier un dispositif de navigation, présentant un dispositif de traitement de données qui est également utilisé pour déterminer l'itinéraire, et présentant un moyen d'affichage qui est également utilisé pour visualiser l'itinéraire déterminé, dans lequel le dispositif a accès au moins temporairement à une base de données sur le réseau routier, et dans lequel le dispositif est conçu pour déterminer une correction de la direction actuelle du moyen de transport étant nécessaire pour suivre l'itinéraire déterminé, ladite correction étant requise en raison d'une transition de l'itinéraire à partir d'une première route à une deuxième route, en particulier par une intersection de la route ou par une bifurcation de la route, et pour effectuer un changement automatique entre au moins un premier et un second mode de fonctionnement si une correction de la direction actuelle du moyen de transport est nécessaire pour suivre l'itinéraire déterminé,
dans lequel un parmi lesdits au moins deux modes de fonctionnement effectue une visualisation de la transition sur le moyen d'affichage par une superposition dynamique au moins partielle d'au moins deux couches de visualisation, dans lequel une désactivation immédiate de la visualisation de la transition est effectuée dès que la transition a été passée par un utilisateur du dispositif en prenant le moyen de transport,
**caractérisé en ce que**
le dispositif est conçu pour effectuer une analyse de la situation routière, en particulier de la situation de virages, pour l'itinéraire subséquent, au moins par sections, suite à la transition, et pour générer une couche de visualisation pour la visualisation de la transition en prenant en compte ladite analyse.

2. Dispositif selon la revendication 1,
**caractérisé en ce que**
le dispositif est conçu de manière à ce que, en utilisant la base de données sur le réseau routier, des informations disponibles étant pertinentes pour l'itinéraire puissent être déterminées et prises en compte dans la visualisation.

3. Dispositif selon la revendication 2,
**caractérisé en ce que**
les information portent sur le panneautage réel du réseau routier inclus dans l'itinéraire, et en particulier des moyens pour le placement d'identificateurs spécifiques pour l'itinéraire sont prévus sur le panneautage.

4. Dispositif selon l'une quelconque des revendications précédentes, **caractérisé en ce que**
le dispositif est conçu de telle manière que le pays dans lequel le dispositif est opéré puisse être déterminé, au moins une couche de visualisation pouvant être affichée sur le moyen d'affichage au moins partiellement en prenant en compte ledit pays, en particulier de façon miroir inversé et/ou en utilisant des couleurs spécifiques pour le pays.

5. Dispositif selon l'une quelconque des revendications précédentes, **caractérisé en ce qu'**
une couche de visualisation comprend au moins un jeu de données d'image.

6. Dispositif selon l'une quelconque des revendications précédentes, **caractérisé en ce que**
la superposition est également effectuée conformément à au moins un paramètre de contrôle de superposition et/ou à une norme de superposition.

7. Dispositif selon l'une quelconque des revendications précédentes, **caractérisé en ce qu'**
une couche de visualisation ayant au moins une image photographique ou vidéographique de la transition réelle est également prévue.

8. Dispositif selon l'une quelconque des revendications précédentes, **caractérisé en ce qu'**
une couche de visualisation ayant au moins une image tridimensionnelle et/ou rendue de manière photoréaliste de la transition réelle est également prévue.

9. Dispositif selon l'une quelconque des revendications précédentes, **caractérisé en ce qu'**
une couche de visualisation pour la représentation d'au moins une courbe graphique et/ou au moins une flèche continue pour symboliser l'itinéraire déterminé est également prévue.

10. Dispositif selon l'une quelconque des revendications précédentes, **caractérisé en ce qu'**
une couche de visualisation ayant un élément graphique mobile et/ou variable est également prévue, ledit élément graphique symbolisant la position actuelle du dispositif.

11. Dispositif selon l'une quelconque des revendications précédentes, **caractérisé en ce qu'**
une couche de visualisation ayant d'autres éléments graphiques est également prévue, en particulier ayant des panneautages, des ponts, des passages inférieurs, des points d'intérêt, des icônes, des tunnels, des silhouettes de bâtiments ou des caractéristiques topographiques, sur la base des alentours réels de la transition de la route.

12. Dispositif selon l'une quelconque des revendications précédentes, **caractérisé en ce que**
les couches de visualisation sont incluses dans le dispositif au moins partiellement indépendamment l'une de l'autre.

13. Procédé pour l'opération d'un dispositif pour déterminer et afficher un itinéraire inclus dans un réseau routier pour un moyen de transport, en particulier un dispositif de navigation, présentant un dispositif de traitement de données qui est également utilisé pour déterminer l'itinéraire, et présentant un moyen d'affichage qui est également utilisé pour visualiser l'itinéraire déterminé, dans lequel le dispositif a accès à une base de données sur le réseau routier au moins temporairement, et dans lequel les étapes de procédé suivantes sont incluses:
a) visualiser la direction de mouvement du moyen de transport dans un réseau routier qui est affiché au moins partiellement sur le moyen d'affichage dans le contexte d'un premier mode de fonctionnement,
b) déterminer un changement de direction étant nécessaire pour suivre l'itinéraire déterminé en prenant le moyen de transport et qui est requis en raison d'une transition à partir d'une première route du réseau routier à une seconde route du réseau routier, en particulier par une intersection de la route ou par une bifurcation de la route ou par une sortie d'autoroute,
c) changer automatiquement à partir d'un premier mode de fonctionnement à un second mode de fonctionnement dans le contexte duquel une visualisation de la transition est effectuée sur le moyen d'affichage si une correction de la direction actuelle du moyen de transport est nécessaire pour suivre l'itinéraire déterminé est requis, dans lequel une superposition dynamique au moins partielle d'au moins deux couches de visualisation est effectuée, dans lequel une désactivation immédiate de la visualisation de la transition est effectuée dès que la transition a été passée par un utilisateur du dispositif en prenant le moyen de transport,
**caractérisé par** les étapes de procédé suivantes:
d) analyser la situation routière, en particulier la situation de virages, pour l'itinéraire subséquent, au moins par sections, suite à la transition, et
e) générer une couche de visualisation pour visualiser la transition en prenant en compte ladite analyse.

14. Procédé selon l'une quelconque des revendications de procédé précédentes,
**caractérisé en ce que**
les caractéristiques des routes faisant partie de la transition sont également déterminées et prises en compte, en particulier le nombre de voies, la circulation à gauche/à droite, les caractéristiques géométriques des voies, ou des situations de passages supérieurs et/ou des situations de passages inférieurs.

15. Procédé selon l'une quelconque des revendications de procédé précédentes,
**caractérisé en ce que**
d'autres informations pertinentes concernant le réseau routier faisant partie de la transition sont également déterminées et prises en compte, en particulier des informations concernant les panneautages réels sur la route, la représentation des panneautages étant mise en oeuvre en particulier en prenant en compte le pays dans lequel le dispositif est opéré.

16. Procédé selon l'une quelconque des revendications de procédé précédentes,
**caractérisé en ce que**
l'heure locale actuelle du jour est également déterminée et prise en compte.

17. Procédé selon l'une quelconque des revendications de procédé précédentes,
**caractérisé en ce que**
les caractéristiques des conditions d'alentours régnant dans la transition sont également déterminées et prises en compte, en particulier la présence de ponts, de passages inférieurs, de points d'intérêt, d'icônes, de tunnels, de silhouettes de bâtiments, de caractéristiques topographiques ou de panneautages.

18. Procédé selon l'une quelconque des revendications de procédé précédentes,
**caractérisé en ce qu'**
en outre une superposition au moins partielle d'une couche de visualisation est effectuée, qui comprend d'autres moyens pour identifier l'itinéraire le long de la transition, en particulier au moins une flèche pour symboliser un changement de direction et/ou un changement de voie à exécuter en prenant le moyen de transport.

19. Procédé selon l'une quelconque des revendications de procédé précédentes,
**caractérisé en ce qu'**
en outre une superposition au moins partielle d'une couche de visualisation est effectuée, qui est utilisée pour visualiser des informations spécifiques pour la route et/ou spécifiques pour la location en utilisant la base de données sur le réseau routier.

20. Procédé selon l'une quelconque des revendications de procédé précédentes,
**caractérisé en ce qu'**
en outre une superposition au moins partielle d'autres couches de visualisation est utilisée pour représenter d'autres informations déterminées en utilisant la base de données sur le réseau routier et/ou des informations pertinentes pour la navigation qui ont été déterminées préalablement ou pendant l'opération du dispositif.

21. Procédé selon l'une quelconque des revendications de procédé précédentes,
**caractérisé en ce qu'**
une couche de visualisation comprend au moins un jeu de données d'image qui est pris en compte pendant la superposition.

22. Procédé selon l'une quelconque des revendications de procédé précédentes,
**caractérisé en ce que**
la superposition des couches de visualisation est effectuée conformément à au moins un paramètre de contrôle de la visualisation et/ou à une norme de visualisation.

23. Procédé selon l'une quelconque des revendications de procédé précédentes,
**caractérisé en ce qu'**
au moins une couche de visualisation est traitée au moins partiellement de telle manière que l'information à visualiser soit également disponible pour l'affichage sur le moyen d'affichage de façon miroir inversé.

24. Procédé selon l'une quelconque des revendications de procédé précédentes,
**caractérisé en ce qu'**
au moins un identificateur spécifique pour l'itinéraire pour le panneautage affiché en utilisant au moins une couche de visualisation est inclus dans le panneautage.
